# FASCICULE DE BREVET EUROPEEN

(11) **EP 0 847 633 B1**
(45) Date de publication et mention de la délivrance du brevet: **29.11.2000**
(21) Numéro de dépôt: 96927459.6
(22) Date de dépôt: 23.08.1996
(51) Int. Cl.: H04B 7/216

(54) **TECHNIQUE DE TELECOMMUNICATION POUR SATELLITE OU UN SIGNAL CDMA EST SUPERPOSE A UN SIGNAL DE TELEVISION AVEC DECALAGE DE PORTEUSES, APPAREIL ASSOCIE A CETTE METHODE**
SATELLITENKOMMUNIKATIONSANORDNUNG IN DEM EIN CDMA SIGNAL MODULIERT IST AUF EINEM FERNSEHSIGNAL MIT VERSCHIEBUNG ZWISCHEN TRAGER, GERAT DAFUR
SATELLITE TELECOMMUNICATION METHOD USING THE SUPERPOSITION OF A CDMA SIGNAL ON A TELEVISION SIGNAL WITH CARRIER OFFSET, AND DEVICE FOR IMPLEMENTING SAME

(30) Priorité: 31.08.1995 BE 9500726
(43) Date de publication de la demande: 17.06.1998
(73) Titulaire: Gillam S.A., 4000 Liège (BE)
(72) Inventeur: BOMANS, Marcel, B-4050 Chaudfontaine-Ninanne (BE); GILLARD, Michel, B-4140 Sprimont (BE); LEONARD, Daniel, B-4200 Liège-Cointe (BE)
(74) Mandataire: Colens, Alain
(86) Numéro de dépôt international: BE9600088
(87) Numéro de publication internationale: WO9708852

(56) Documents cités:
- WO-A-83/02533
- WO-A-95/20277
- DE-A- 3 644 174
- DE-A- 3 644 175
- GB-A- 2 276 794

## Description

La présente invention se rapporte à un appareil et une technique de télécommunication, en particulier pour communication par satellite réutilisant les ressources d'un répéteur allouées pour la diffusion d'un programme de télévision analogique ou numérique. Selon l'invention, les signaux de télécommunication transportant l'information à échanger sont notamment soumis à une modulation avec étalement de spectre.

La majorité des utilisateurs utilisant une partie des ressources d'un satellite pour diffuser des programmes de télévision, demandent la possibilité de transmettre séparément du signal principal de télévision ( analogique ou numérique ) des signaux de télécommunication via de petites stations terriennes d'émission / réception ( VSAT), et ce pour réaliser de petits réseaux d'échange d'information ( téléphonie, reportage interactif, télé-éducation, coordination d'accès au satellite, télémaintenance ).

Ces utilisateurs souhaitent fortement transmettre le signal principal de télévision et les signaux de télécommunication via le même segment spatial ( répéteur loué dans son entièreté ou en partie ). La solution retenue jusqu'à présent consiste à utiliser pour chaque signal de télécommunication une porteuse modulée directement par l'information numérisée à transmettre ( SCPC ), par exemple en utilisant une modulation par déplacement de phase à 2 ou 4 états, et située dans la bande de fréquence occupée par le signal modulé de télévision.

Dans la plupart des situations pratiques, cette solution conduit à consommer plus de ressource spatiale que celle réellement nécessaire pour transmettre les signaux de télécommunication. Cette perte peut représenter jusqu'à 6 MHz de la bande passante, et 10% à 20% de la puissance d'un répéteur de 36 MHz de bande passante, dans une situation courante où le satellite émet dans une polarisation via un premier répéteur un programme principal de télévision et les signaux de télécommunication, et où il émet également dans la polarisation orthogonale via un second répéteur, dont la bande de fréquence recouvre en partie celle du premier, une porteuse de télévision modulée en fréquence.

L'origine du problème se situe au niveau des phénomènes d'interférence introduits par les signaux contra-polaires émis par le satellite dans la même bande de fréquence mais dans la polarisation orthogonale à celle utilisée par les signaux de télécommunication, et par le signal principal de télévision; desquels il faut protéger les signaux de télécommunication en augmentant leur puissance de 5 dB à 10 dB au-dessus du niveau requis dans une situation normale, et en réduisant la bande de fréquence utilisable par les signaux contra-polaires de manière à limiter suffisamment les interférences qu'ils introduisent dans la bande de fréquence utilisée par les signaux de télécommunication.

Du point de vue des utilisateurs, cette solution présente les désavantages majeurs de ne permettre la transmission simultanée que d'un faible nombre de signaux de télécommunication ( à cause des pertes susmentionnées ), et de perturber le signal principal de télévision lorsque le nombre de signaux de télécommunication à échanger dépasse quelques unités ( ces derniers s'apparentent à des signaux parasites à spectre étroit du point de vue du signal T.V.).

Le document DE 3644174 A1 propose une technique de télécommunication par satellite qui décrit l'utilisation de signaux à spectre étalé occupant des bandes de fréquence situées en dehors de la bande de fréquence occupée par un signal de télévision modulé en fréquence et restées non occupées sur le répéteur du satellite.

Le document susmentionné et le document DE 3644168 A1 divulgue également la possibilité de superposer dans la

Il est également connu par la demande de brevet d'invention DE 3644168 A1, qu'il est possible de superposer dans la bande de fréquence d'un répéteur de satellite, utilisée pour diffuser un programme analogique de télévision modulé en fréquence, quelques signaux de télécommunication utilisant une modulation avec étalement de spectre ( DS-CDMA ) de l'information à transmettre. Ce système se caractérise par le fait que la fréquence des porteuses des signaux de télécommunication est identique à celle du signal modulé de télévision, et que le spectre des signaux de télécommunication est étalé sur une grande partie de la bande de fréquence occupée par le signal modulé de télévision.

Cette solution présente les mêmes désavantages que la précédente, à savoir, que pour lutter contre les interférences introduites par le signal modulé de télévision sur les signaux de télécommunication il faut augmenter leur puissance de 10 dB à 15 dB au-dessus du niveau requis dans une situation normale, et ce malgré la protection relative introduite par l'utilisation d'une modulation avec étalement de spectre, et donc le nombre de signaux de télécommunication qui peut être supporté par le segment spatial utilisé pour diffuser le programme de télévision est très faible. En outre, même lorsqu'un seul signal de télécommunication est superposé au signal modulé de télévision, il influence les performances de diffusion du programme T.V. ( dégradation du rapport signal sur bruit vidéo pondéré après démodulation du signal modulé de télévision ).

Le premier but de l'invention est d'augmenter fortement les performances de ces systèmes, c'est-à-dire d'augmenter le nombre de signaux de télécommunication supportés, tout en réduisant les pertes de puissance et de bande de fréquence du segment spatial ( c'est-à-dire en diminuant la sensibilité des signaux de télécommunication vis-à-vis des signaux perturbateurs et du signal principal de télévision), et en rendant négligeable l'influence des signaux de télécommunication sur les performances de diffusion du programme de télévision.

Le second but de l'invention est d'étendre le support de ces systèmes ( réutilisation de répéteurs de télévision diffusant un signal analogique T.V. modulé en fréquence sur une porteuse : FM TV ) à la réutilisation de ressources spatiales employées pour diffuser un programme de télévision numérique modulé par déplacement de phase sur une porteuse ( BPSK, QPSK ).

Ces buts sont atteints par l'enseignement donné dans la partie caractérisante des revendications 1 et 11.

Dans le présent système, la technique employée pour superposer les signaux de télécommunication au signal principal de télévision consiste à ajouter dans une même partie de la bande de fréquence d'un répéteur de satellite totalement occupée par un signal modulé de télévision (analogique ou numérique ), des signaux de télécommunication utilisant une même modulation quelconque par étalement de spectre de l'information à transmettre (telle que les modulations utilisant le codage par inversion de séquence puis modulation par déplacement de phase : PSK-DS CDMA, ou utilisant des sauts de fréquence codés : PSK-FH CDMA, ou utilisant des procédés chirp ou encore toute combinaison quelconque de celles-ci ), de manière à réduire leur influence sur le signal T.V. ( faible densité de puissance des signaux à spectre étalé ) et à augmenter leur résistance vis-à-vis des perturbations co-polaires et contra-polaires ainsi que. du signal principal de télévision.

De manière à limiter la perturbation introduite par le signal principal de télévision sur les signaux de télécommunication et à réduire encore plus l'influence de ces derniers sur le signal T.V., et par conséquent permettre l'utilisation simultanée d'un grand nombre de signaux de télécommunication, ces derniers utilisent en plus un décalage en fréquence de leurs porteuses par rapport à la porteuse du signal modulé de télévision.

Le décalage en fréquence des porteuses et le facteur d'étalement du spectre des signaux de télécommunication sont choisis de manière à ce que la bande de fréquence occupée par les signaux de télécommunication se situe dans une partie de la bande de fréquence occupée par le signal modulé de télévision où l'influence combinée de tous les signaux de télécommunication se manifeste après démodulation du signal modulé de télévision par un bruit qui est, soit dans le cas d'une transmission analogique du signal T.V. situé au-dessus de la bande de fréquence occupée par les sous-porteuses son ( pas d'influence sur les signaux son après démodulation de ces dernières ) et également rejeté par la fonction de pondération CCIR du bruit à utiliser( pas d'influence sur l'image ), soit dans le cas d'une transmission numérique du signal T.V. rejeté par le filtre de canal utilisé par un récepteur de signaux T.V. numériques pour sélectionner un canal particulier de télévision, filtre qui est recommandé par l'opérateur du satellite pour garantir les performances de diffusion du programme numérique de télévision ( taux d'erreur ).

La technique de télécommunication selon un aspect principal de l'invention consiste donc à ajouter dans la bande de fréquence d'un répéteur, ou partie de répéteur, de satellite, ou un dispositif terrestre équivalent, complètement utilisée pour diffuser un signal principal de télévision, ou signal équivalent, modulé de manière quelconque, des signaux de télécommunication transportant l'information à échanger. Ces signaux de télécommunication sont caractérisés, par une modulation avec étalement de spectre quelconque, et par un décalage en fréquence quelconque de leurs porteuses par rapport à la porteuse du signal principal de télévision, et par l'utilisation d'une partie de la bande de fréquence occupée par le signal modulé de télévision qui rend négligeable leur influence sur ce dernier, ainsi que par un partage quelconque entre eux et le signal principal de télévision de la puissance associée au segment spatial utilisé pour diffuser le programme de télévision.

L'invention concerne également un appareil comprenant les moyens nécessaires pour communiquer avec au moins un autre appareil de télécommunication compatible selon la technique de télécommunication susmentionnée.

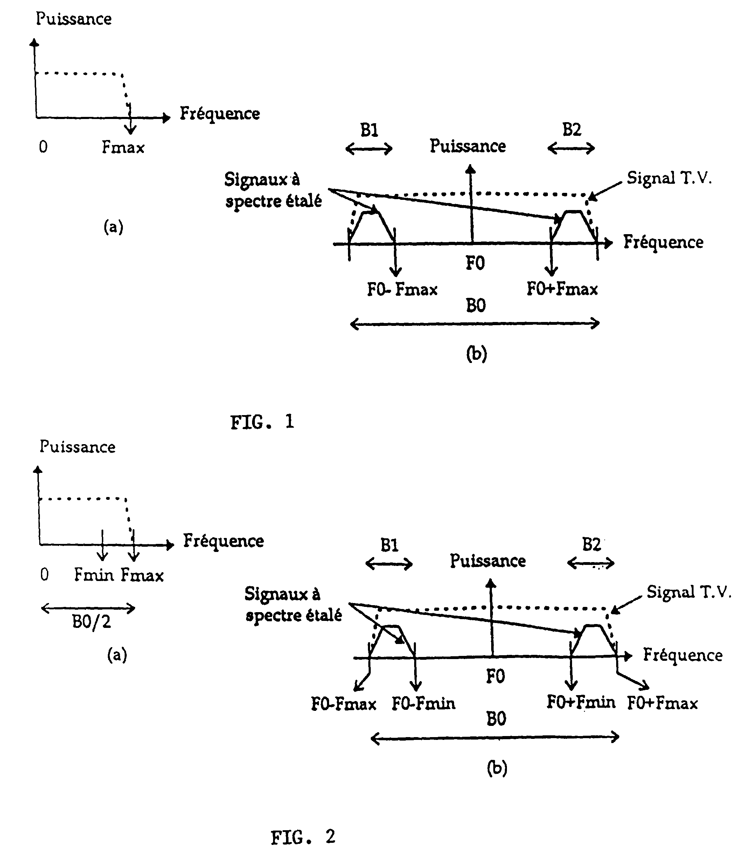

La fig. 1 illustre l'invention appliqué à un signal analogique de télévision. La fig. la représente le spectre du signal T.V. composite en bande de base. La fig. 1b illustre l'occupation spectrale du canal utilisé pour diffuser le signal TV.

Dans le cas d'un signal analogique de télévision modulé en fréquence sur une porteuse F0 et occupant toute la bande de fréquence B0, les bandes de fréquence B1 et B2 sont utilisables par les signaux de télécommunication, sans influencer de manière conséquente le signal modulé de télévision. Elle se situent de part et d'autre de la porteuse F0 et dans la région caractérisée par un décalage en fréquence par rapport à cette porteuse compris entre Fmax et le bord de la bande de fréquence occupée par le signal modulé de télévision, Fmax étant la fréquence la plus élevée occupée par le signal T.V. composite ( image plus sous-porteuses son ) en bande debase. La bande de fréquence B0 occupée par le signal analogique de télévision modulé en fréquence étant en pratique toujours deux fois plus grande que Fmax ( loi de Carson ), les bandes de fréquence Bi et B2 utilisables par les signaux de télécommunication existeront également toujours.

La fig. 2 illustre l'invention appliquée à un signal numérique de télévision. La fig. 2a représente le spectre en bande de base des signaux numériques filtrés modulant les composantes I et Q de la porteuse T.V. La fig. 2b illustre l'occupation spectrale du canal utilisé pour diffuser le signal T.V.

Dans le cas d'un signal numérique de télévision modulé par déplacement de phase sur une porteuse F0 et occupant toute la bande de fréquence B0, les bandes de fréquence B1 et B2 sont utilisables par les signaux de télécommunication, sans influencer de manière conséquente le signal modulé de télévision ( figure 2 ). Ellesse situent de part et d'autre de la porteuse F0 et dans la région caractérisée par un décalage en fréquence par rapport à cette porteuse compris entre Fmin et le bord de la bande de fréquence occupée par le signal modulé de télévision, Fmin étant égal à 0.6 / Tb, où Tb est la durée des bits d'information modulant par déplacement de phase les composante en phase I, et en quadrature Q pour une modulation à 4 états ( QPSK ), de la porteuse F0 du signal T.V. La bande de fréquence B0 occupée par le signal numérique de télévision modulé en phase étant en pratique toujours deux fois plus grande que Fmin ( réalisation pratique des filtres de Nyquist recommandés par l'opérateur du satellite, et utilisés pour limiter la bande de fréquence occupée en bande de base par les signaux modulant en phase et en quadrature les composantes I et Q de la porteuse du signal T.v. ), les bandes de fréquence B1 et B2 utilisables par les signaux de télécommunication existeront également toujours.

Dans tous les cas de figure ( caractéristiques des répéteurs, type de modulation du signal de télévision, débit d'information véhiculé par un signal de télécommunication), un décalage en fréquence particulier et un facteur d'étalement particulier peuvent être sélectionnés sur base des critères exposés ci-dessus, de sorte que le bruit introduit après démodulation du programme de télévision par les signaux de télécommunication n'influence que de manière négligeable les performances de diffusion du programme de télévision et donc autorise l'utilisation simultanée d'un grand nombre de signaux de télécommunication, ce qui ne serait pas le cas si le facteur d'étalement des signaux de télécommunication ou leur décalage en fréquence conduisaient à l'utilisation par ces derniers d'une partie plus grande de la bande de fréquence, ou de toute la bande de fréquence, occupée par le signal modulé de télévision.

La partie de la puissance du segment spatial nécessaire pour relayer les signaux de télécommunication ne représente qu'une très faible partie de la puissance utilisée pour diffuser le programme de télévision. Elle s'évalue en considérant une situation normale d'interférence du répéteur de satellite, c'est-à-dire non sévèrement perturbée par le signal principal de télévision, et ce grâce à la résistance des signaux de télécommunication vis-à-vis du signal principal de télévision ( décalage en fréquence des porteuses, modulation à spectre étalé des signaux de télécommunication ), mais aussi vis-à-vis des parasites de toutes sortes, et notamment contra-polaires.

Cette technique permet de réaliser à faible coût et de manière performante des systèmes de télécommunication utilisant un segment spatial alloué pour la diffusion d'un programme de télévision.

Elle est avantageusement caractérisée par une influence négligeable des signaux de télécommunication sur les performances de diffusion de l'émission principale de télévision, une bonne efficacité ( de nombreux signaux de télécommunication peuvent être supportés par un répéteur de télévision ), une grande flexibilité d'utilisation de par sa résistance aux interférences de toutes sortes ( planification aisée de l'allocation des ressources d'un satellite entre les différents utilisateurs ), une bonne utilisation du segment spatial ( pertes négligeables de puissance et de bande de fréquence; puissance normale attribuée aux signaux de télécommunication ), et le respect de la réglementation internationale ( ITU, ETSI ) en termes de puissance rayonnée hors axe et de parasites émis même lorsque le nombre de signaux de télécommunication ( stations au sol ) est important.

### Exemple 1

La première réalisation concerne une situation où un répéteur de 27 MHz de bande passante sur un satellite Eutelsat II est entièrement utilisé pour diffuser un programme de télévision caractérisé par, une modulation analogique en fréquence du signal T.V. qui comporte des sous-porteuses son ( la bande de fréquence occupée en bande de base par le signal T.V. s'étend jusqu'à 10 MHz ), et dont la diffusion est perturbée par une émission T.V. située dans la polarisation orthogonale et qui utilise une bande de fréquence commune.

Pour émettre un signal de télécommunication vers le satellite concerné, une station VSAT au sol module d'abord une porteuse par déplacement de phase à 4 états ( QPSK ) avec étalement de spectre selon le procédé quasi synchrone utilisant le codage par inversion de séquence de l'information binaire à échanger ( QS - CDMA ), cette dernière consistant en des signaux de téléphonie numérisés et compressés, dont le débit est égal à 9600 bit/s. Un couple de séquences de la famille de Gold est nécessaire et suffisant pour identifier complètement un signal de télécommunication ainsi modulé en phase par ces séquences dont le débit est de 2 Mbit/s sur chacune des composantes, en phase et en quadrature, de sa porteuse. Le signal modulé subit ensuite un filtrage de canal qui a pour but de limiter son spectre dans une bande de fréquence de 3 MHz centrée sur sa porteuse, puis est émis vers le satellite avec un écart de fréquence de 12 MHz entre sa porteuse et la porteuse du signal de télévision de sorte, que l'influence combinée de tous les signaux de télécommunication sur les performances de diffusion de l'émission T.V. se manifeste après démodulation du signal T.V. par un bruit additif situé dans une bande de fréquence ( 10,5 MHz à 13,5 MHz ) ne perturbant ni le signal composite ( image ), ni les sous-porteuses son; et que la puissance des perturbations introduites par le signal T.V. sur les signaux de télécommunication soient réduites d'environ 25 dB ( de par la décroissance de la densité spectrale de puissance du signal T.V. modulé en fréquence dans la bande de fréquence occupée par les signaux de télécommunication par rapport au centre de la bande de fréquence occupée par le signal modulé de télévision ).

Cette réalisation particulière, permet de faire cohabiter sur le même répéteur, le signal principal de télévision et une trentaine de communications bidirectionnelles véhiculant de l'information numérisée à 9600 bit/s, tout en perdant moins de 1 % de la puissance utilisable pour l'émission T.V., en ne sacrifiant pas de bande passante, et en ne modifiant que de manière négligeable les performances de diffusion de l'émission T.V.

### Exemple 2.

La seconde réalisation concerne une situation où une bande passante de 9 MHz et 1/8èmes de la puissance d'un répéteur de 72 MHz de bande passante sur un satellite Eutelsat II sont utilisés pour diffuser un programme de télévision caractérisé par, une modulation par déplacement de phase à 4 états du signal T.V. numérique ( QPSK ) et caractérisé par un débit d'information binaire en bande de base de 8,448 Mbit/s et deux trains d'information binaires de débit égal à 8,448 / ( 2 x 0.75 ) Mbit/s modulant en phase les composantes en phase et en quadrature de la porteuse T.V., le facteur 0,75 étant introduit par un codage de l'information ( FEC ) la protégeant contre les erreurs de transmission.

On utilise la même technique de transmission des signaux de télécommunication véhiculant de l'information numérique caractérisée par un débit binaire égal à 9600 bit/s que dans le cas de figure précédent, mais en fixant : le débit des codes d'étalement à 750 kbit/s, l'écart entre les porteuses de télécommunication et la porteuse du signal de télévision à 3,9 MHz, et en utilisant un filtre de canal pour confiner le spectre d'un signal de télécommunication dans une bande de fréquence de 1,2 MHz centrée sur sa porteuse, c'est-à-dire dans une bande de fréquence comprise entre 3,3 MHz ( = 0,6 / Tb ) et 4,5 MHz ( bord du canal de télévision ) de décalage en fréquence par rapport à la porteuse de télévision.

Dans ce cas, les ressources spatiales ( bande de fréquence, puissance ) utilisées pour diffuser le signal principal de télévision permettent également la transmission d'une trentaine de communications bidirectionnelles véhiculant de l'information numérisée à 9600 bit/s, tout en perdant moins de 0,3 dB sur la puissance utilisable pour émettre l'émission T.V., en ne sacrifiant pas de bande passante, et en ne modifiant que de manière négligeable le taux d'erreur associé à la transmission du signal numérisé de télévision.

Il est donc bien entendu que l'invention peut s'appliquer également pour des systèmes de transmission terrestre et/ou si les signaux de télévision sont remplacés par des signaux de caractéristiques essentiellement identiques ou encore sont remplacés par des signaux polluants s'apparentant à des signaux analogiques ou numériques de télévision.

L'invention n'est pas limitée aux modes de réalisation particuliers décrits ci-dessus et comprend toutes les variantes de réalisation évidentes pour l'homme de l'art.

## Revendications

1. Technique de télécommunication terrestre ou par satellite dans laquelle on utilise, pour transmettre des signaux de télécommunication, les ressources bande de fréquence et puissance, d'un répéteur spatial ou les ressources d'un système de transmission terrestre
employées dans sa totalité ou en partie pour la diffusion d'un programme de télévision analogique ou numérique,
ou employées dans sa totalité ou en partie pour la transmission des signaux modulés ayant des caractéristiques similaires à celles de signaux analogiques ou numériques de télévision,
ou polluées par des signaux indésirables s'apparentant à des signaux analogiques ou numériques,
les signaux de télécommunication utilisant une modulation avec étalement de spectre des informations à transmettre,
**caractérisé en ce que** les porteuses des signaux de télécommunication se trouvent dans la bande de fréquence occupée par le signal de télévision ou par lesdits signaux aux caractéristiques similaires ou apparentés et sont décalées en fréquence par rapport à la porteuse du signal de télévision ou par lesdits signaux aux caractéristiques similaires ou apparentés.

2. Technique de télécommunication suivant la revendication 1 caractérisée en ce que la bande de fréquence occupée par les signaux de télécommunication est choisie de manière à rendre négligeable leur influence sur les performances de diffusion de l'émission T.V. et/ou de manière à réduire les perturbations introduites par le signal modulé de télévision sur les signaux de télécommunication et/ou de manière à permettre l'emploi d'un grand nombre de signaux de télécommunication caractérisés par une puissance associée à une situation quasi normale d'utilisation de ressources spatiales non déjà utilisées.

3. Technique de télécommunication selon n'importe laquelle des revendications précédentes caractérisée en ce que le signal de télévision est analogique et les bandes de fréquences des signaux de télécommunications (B1 et B2) se situent de part et d'autre de la porteuse F0 comprise dans la bande de fréquence B0, dans la région caractérisée par un décalage en fréquence par rapport à cette porteuse compris entre Fmax et le bord de la bande de fréquence occupée par le signal modulé de télévision, Fmax étant la fréquence la plus élevée occupée par le signal T.V. composite, image plus sous-porteuses son, en bande de base.

4. Technique de télécommunication suivant les revendications 1 et 2 caractérisé en ce que le signal de télévision est numérique et occupe toute une bande de fréquence (B0), ledit signal étant modulé par déplacement de phase sur une porteuse (F0) et en ce que les bandes de fréquences des signaux de télécommunication (B1 et B2) se situent de part et d'autre de la porteuse F0 comprise dans la bande de fréquence (B0), dans la région caractérisée par un décalage en fréquence par rapport à cette porteuse compris entre Fmin et le bord de la bande de fréquence occupée par le signal modulé de télévision, Fmin étant égal à 0,6 / Tb, où Tb est la durée des bits d'information modulant par déplacement de phase les composantes en phase I, et en quadrature Q pour une modulation à 4 états ( QPSK ), de la porteuse (F0) du signal de télévision.

5. Technique de télécommunication selon n'importe laquelle des revendications caractérisé en ce que la modulation par étalement de spectre est du type utilisant le codage par inversion de séquence puis modulation par déplacement de phase ou de fréquence (PSK-FH CDMA).

6. Technique de télécommunication selon n'importe laquelle des revendications caractérisé en ce que la modulation par étalement de spectre est du type utilisant des procédés chirps.

7. Dispositif ou appareil de télécommunication sans fil pour communiquer par un signal de télécommunication à spectre étalé inséré dans le canal de transmission occupé par un signal de télévision, ou apparenté, les porteuses des signaux de télécommunication se trouvant dans la bande de fréquence occupée par le signal de télévision ou apparenté, et sont décalées en fréquence par rapport à la porteuse du signal de télévision ou apparenté,
ledit dispositif comprenant :
- le moyen nécessaire pour ajouter au moins un signal de télécommunication à spectre étalé dans le canal occupé par un signal de télévision, ou apparenté, formant ainsi au niveau du canal de transmission un signal composite;
ledit moyen comprenant au moins les éléments suivants :
un modulateur à spectre étalé pour générer les signaux de télécommunication à spectre étalé; un moyen pour contrôler la fréquence des porteuses utilisée par les signaux de télécommunication; un moyen pour contrôler la puissance des signaux de télécommunication à spectre étalé; un moyen pour émettre au moins un signal de télécommunication,
- et le moyen nécessaire pour recevoir le signal composite et pour séparer au moins un signal de télécommunication à spectre étalé du signal composite et le démoduler.

8. Dispositif ou appareil de télécommunication de la revendication 7, où le moyen pour insérer les signaux de télécommunication à spectre étalé comprend au moins l'un des équipements suivants : (a) un modulateur à spectre étalé employant une modulation analogique ou numérique par modification de phase, d'amplitude ou de fréquence ou encore d'une combinaison quelconque de ces dernières; d'un transposeur de fréquence pour fixer la fréquence d'émission des porteuses utilisées par les signaux de télécommunication; un amplificateur pour amplifier les signaux de télécommunication à spectre étalé; une antenne pour émettre les signaux de télécommunication à spectre étalé; et (b) le moyen pour contrôler l'étalement des signaux de télécommunication à spectre étalé ; le moyen pour fixer la fréquence des porteuses utilisées par les signaux de télécommunication en fonction de celle du signal de télévision ; le moyen pour contrôler la puissance des signaux de télécommunication à spectre étalé en fonction de celle du signal de télévision ; où ces moyens pour contrôler l'étalement, la puissance et la fréquence des porteuses des signaux de télécommunication sont opérables pour maintenir les plages de fonctionnement et comprennent : les moyens pour détecter la puissance et la fréquence du signal de télévision et la puissance et la fréquence des porteuses des signaux à spectre étalé présents sur dans le canal de transmission; les moyens pour ajuster l'étalement, la fréquence et la puissance des signaux à spectre étalé émis de telle manière que les plages de fonctionnement autorisées soient respectées.

9. Dispositif ou appareil de télécommunication de la revendication 7, dans lequel le moyen pour recevoir comprend : le moyen de capter le signal composite; le moyen pour séparer les signaux de télécommunication du signal de télévision; le moyen pour sélectionner les signaux de télécommunication à spectre étalé; le moyen pour démoduler au moins un signal de télécommunication à spectre étalé.

10. Dispositif ou appareil de télécommunication selon la revendication 9, dans lequel le moyen pour recevoir comprend au moins l'un des éléments suivants : une antenne de captation du signal composite présent sur le canal de transmission; un diviseur de puissance pour fournir le signal composite d'une part au démodulateur du signal de télévision et d'autre part au moyen de sélection des signaux à spectre étalé; un filtre de canal pour sélectionner les signaux à spectre étalé présents dans le signal composite; un diviseur de puissance pour fournir les signaux à spectre étalé sélectionnés à au moins un moyen de démodulation des signaux à spectre étalé; au moins un démodulateur à spectre étalé adapté aux modulations analogique ou numérique par modifications de phase, amplitude ou fréquence ou encore d'une combinaison quelconque de ces dernières.

## Patentansprüche

1. Erd- oder satellitengebundene Telekommunikationstechnik, bei der zur Übertragung eines Telekommunikationssignales die Mittel des Frequenz- und Leistungsbandes eines im Weltraum befindlichen verstärkers oder die Mittel eines terrestrischen Übertragungssystemes genutzt werden wobei diese Mittel ganz oder teilweise für die Ausstrahlung eines analogen oder digitalen Fernsehprogramms eingesetzt werden
oder ganz oder teilweise für die Übertragung von modulierten Signalen eingesetzt werden, deren Charakteristiken denen analoger oder digitaler Fernsehsignale gleichartig sind,
oder die mit unerwünschten Signalen verunreinigt sind, die denen analoger oder digitaler Signale gleichartig sind,
wobei die Telekommunikationssignale eine Modulation mit einer Spreizung des Spektrums der zu übertragenden Informationen nutzen,
dadurch gekennzeichnet, daß sich die Träger der Telekommunikationssignale in dem vom Fernsehsignal oder von den genannten Signalen mit ähnlicher oder verwandter Charakteristik benutzten Band befinden und daß sie in ihrer Frequenz in Bezug auf die Trägerfrequenz der vom Fernsehsignal oder von den genannten Signalen mit ähnlicher oder verwandter Charakteristik umgesetzt werden.

2. Telekommunikationstechnik gemäß Anspruch 1, dadurch gekennzeichnet, daß das von den Telekommunikationssignalen benutzte Frequenzband so gewählt ist, daß sein Einfluß auf die Übertragungseigenschaften der Fernsehausstrahlung vernachlässigbar ist und/oder so, daß die vom Fernseh-Modulationssignal auf die Telekommunikationssignale ausgehenden Störungen vermindert werden und/oder so, daß eine große Anzahl von Telekommunikationssignalen genutzt werden kann, die eine Leistung aufweisen, die einer normalen Gebrauchssituation entsprechen und die bei einer Ausnutzung weltraumgestützter Mittel bisher nicht nutzbar war.

3. Telekommunikationstechnik nach einem der vorhergehenden Ansprüche, dadurch gekennzeichnet, daß das Fernsehsignal analog ist und daß die Frequenzbänder der Telekommunikationssignale (B1 und B2) zu beiden Seiten des Trägers F0 im Frequenzband (B0) liegen, in dem Bereich, der durch eine Frequenzverschiebung in bezug auf denjenigen Träger gekennzeichnet ist, der zwischen Fmax und dem Rand des vom Fernseh-Modulationssignal genutzten Bandes liegt, wobei Fmax die höchste Frequenz ist, die vom Komposit-Fernsehsignal, Bild- und Ton-Unterträger, als Basisband genutzt wird.

4. Telekommunikationstechnik nach einem der Ansprüche 1 oder 2, dadurch gekennzeichnet, daß das Fernsehsignal digital ist und ein vollständiges Frequenzband (B0) nutzt, wobei dieses Signal mittels Phasenverschiebung auf einen Träger (F0) moduliert ist und wobei die Frequenzbänder der Telekommunikationssignale (B1 und B2) zu beiden Seiten des Trägers F0 im Frequenzband (B0) liegen, in dem Bereich, der durch eine Frequenzverschiebung in bezug auf denjenigen Träger gekennzeichnet ist, der zwischen Fmin und dem Rand des vom Fernseh-Modulationssignal genutzten Bandes liegt, wobei Fmin 0,6/Tb ist und wobei Tb die Dauer der Informationsbits ist, die mittels Phasenverschiebung die Phasenbestandteile I und in der Quadratur Q für eine Modulation in 4 Zuständen (QPSK) des Trägers (F0) des Fernsehsignals modulieren.

5. Telekommunikationstechnik nach einem der vorhergehenden Ansprüche, dadurch gekennzeichnet, daß die Modulation durch Spreizung des spektrums der Art ist, daß eine Kodierung mittels Umkehrung der Reihenfolge zusätzlich zur Phasen- oder Frequenzmodulation (PSK-FH CDMA) benutzt wird.

6. Telekommunikationstechnik nach einem der vorhergehenden Ansprüche, dadurch gekennzeichnet, daß die Modulation durch Spreizung des Spektrums der Art ist, daß sie das chirps-verfahren benutzt.

7. Vorrichtung oder drahtloses Telekommunikationsgerät zur Kommunikation über ein Telekommunikationssignal mit einem gespreizten Spektrum, das in den von einem Fernsehübertragungssignal oder dergleichen genutzten Kanal eingebettet ist, wobei sich die Träger der Telekommunikationssignale in dem von den Fernsehsignalen oder dergleichen genutzten Frequenzband befinden und in ihrer Frequenz in bezug auf den Träger der Fernsehsignale oder dergleichen verschoben sind, mit:
- dem erforderlichen Mittel um wenigstens ein Telekommunikationssignal mit gespreiztem Spektrum in den von einem Fernsehsignal oder dergleichen genutzten Kanal einzuspeisen und auf diese weise im Bereich des Übertragungskanales ein zusammengesetztes Signal zu erzeugen;
wobei das genannte Mittel wenigstens die folgenden Elemente umfaßt:
einen Modulator mit gespreiztem Spektrum zur Erzeugung eines Telekommunikationssignals mit gespreiztem Spektrum; ein Mittel zur Kontrolle der von den Telekommunikationssignalen benutzten Trägerfrequenz; ein Mittel zur Kontrolle der Leistung des Telekommunikationssignals mit gespreiztem Spektrum; ein Mittel, um wenigstens ein Telekommunikationssignal auszusenden,
- und dem erforderlichen Mittel um ein zusammengesetztes Signal zu empfangen und um wenigstens ein Telekommunikationssignals mit gespreiztem Spektrum aus einem zusammengesetzten Signal abzutrennen und zu demodulieren.

8. Vorrichtung oder Telekommunikationsgerät nach Anspruch 7, wobei das Mittel zur Einspeisung der Telekommunikationssignale mit gespreiztem Spektrum wenigstens eines der nachfolgenden Einrichtungen umfaßt: (a) einen Modulator mit gespreiztem Spektrum, der eine analoge oder digitale Modulation zur Modifikation der Phase, der Amplitude oder der Frequenz oder eine Kombination letzterer nutzt, mit einem Frequenzumsetzer zur Einstellung der Ausstrahlungsfrequenz der von den Telekommunikationssignalen genutzten Träger; einem Verstärker zur Verstärkung der Telekommunikationssignale mit gespreiztem Spektrum; und (b) einem Mittel, um die Spreizung der Telekommunikationssignale mit gespreiztem Spektrum zu kontrollieren; einem Mittel zur Einstellung der Frequenz der von den Telekommunikationssignalen genutzten Träger in Abhängigkeit von derjenigen des Fernsehsignals, einem Mittel zur Kontrolle der Leistung der Telekommunikationssignale mit gespreiztem Spektrum in Abhängigkeit von derjenigen des Fernsehsignals; wobei diese Mittel zur Kontrolle der Spreizung, der Leistung und der Frequenz der Träger der Telekommunikationssignale dazu dienen, die Funktionsgrenzen aufrechtzuerhalten und folgendes umfassen; Mittel zur Erkennung der Leistung und der Frequenz des Fernsehsignales und der Leistung und der Frequenz der Träger der auf dem Übertragungskanal vorhandenen Signale mit gespreiztem Spektrum, Mittel zur Einstellung der Spreizung, der Frequenz und der Leistung der abgestrahlten Signale mit gespreiztem Spektrum in der weise, daß die Grenzen des erlaubten Funktionsbereiches eingehalten werden.

9. Vorrichtung oder Telekommunikationsgerät nach Anspruch 7, wobei die Empfangseinrichtung folgendes umfaßt: ein Mittel zum Empfang eines zusammengesetzten signales; ein Mittel zur Abtrennung eines Telekommunikationssignales von einem Fernsehsignal; ein Mittel zur Auswahl von Telekommunikationssignalen mit gespreiztem Spektrum; ein Mittel zur Demodulation wenigstens eines Telekommunikationssignales mit gespreiztem Spektrum.

10. Vorrichtung oder Telekommunikationsgerät nach Anspruch 9, wobei die Empfangseinrichtung wenigstens eines der nachfolgenden Elemente umfaßt: eine Antenne zum Empfang eines auf einem Übertragungskanal vorhandenen zusammengesetzten Signales; einen Teiler, der in der Lage ist, das zusammengesetzte Signal zu einem Teil in den Demodulator für das Fernsehsignal einzuspeisen und zum anderen Teil in das Mittel zur Auswahl von Telekommunikationssignalen mit gespreiztem Spektrum; einen Teiler, der in der Lage ist, die ausgewählten Telekommunikationssignale mit gespreiztem Spektrum in wenigstens eine Demodulationseinrichtung für Signale mit gespreiztem Spektrum einzuspeisen; wenigstens einen Demodulator für Signale mit gespreiztem Spektrum, der für analoge oder digitale Modulationen durch Modifikationen der Phase, der Amplitude oder der Frequenz oder einer Kombination der vorgenannten angepaßt ist.

## Claims

1. Telecommunication method, terrestrial or by satellite, wherein there is used, in order to transmit telecommunication signals, the resources, frequency band and power, of a spatial transponder, or the resources of a terrestrial transmission system
wholly or partially used for broadcasting an analog or digital television program,
or wholly or partially used for transmitting modulated signals with features similar to the ones of analog or digital television signals,
or polluted by undesirable signals having the appearance of analog or digital signals,
said telecommunication signals using a spread spectrum modulation of the information to be transmitted,
characterised in that the carriers of the telecommunication signals are located in the frequency band occupied by the television signal or by said signal being similar or having the said appearance, and are offset in frequency relative to the carrier of the television signal or by said signal being similar or having the said appearance.

2. Telecommunication method according to claim 1, characterised in that the frequency band occupied by telecommunication signals is chosen in such a way that their influence on the performances of the transmission of the TV signal is insignificant and/or in such a way that there is a decrease of the perturbations introduced by the modulated television signal on the telecommunication signals and/or in such a way to allow the use of a large number of telecommunication signals characterised by a power associated to a quasi-normal use of space resources not yet used.

3. Telecommunication method according to claim 1 or 2 characterised in that the television signal is an analog signal and the frequency bands of the telecommunication signals (B1 and B2) are located on both sides of the carrier F0 comprised in the frequency band B0, in the region characterised by a frequency offset relative to the said carrier comprised between Fmax and the border of the frequency band occupied by the modulated television signal, Fmax being the highest frequency occupied by the composite TV signal , video plus audio sub-carriers, in base band.

4. Telecommunication method according to claims 1 and 2 characterised in that the television signal is a digital signal and occupies the whole frequency band (B0), said signal being modulated by phase shift keying on a carrier (F0) and in that the frequency bands (B1 and B2) of the telecommunication signals are located on both sides of the carrier F0 comprised in the frequency band (B0), in a region characterized by a frequency shift relative to the carrier between Fmin and the border of the frequency band occupied by the modulated television signal, Fmin being equal to 0.6/Tb, where Tb is the duration of information bits modulating by phase shift the in-phase component I, and quadrature component Q for a 4 state modulation (QPSK), of the carrier (F0) of the TV signal.

5. Telecommunication method according to any of the claims characterised in that the spread spectrum modulation is of the type using a coding by inversion of sequence followed by a phase shift keyed modulation (PSK-DS CDMA).

6. Telecommunication method according to any of the preceding claims characterised in that the spread spectrum modulation is of the type using chirp techniques.

7. Wireless telecommunication arrangement or apparatus for communicating via a spread spectrum telecommunication signal inserted in the transmission channel occupied by a television signal, or the like,
the carriers of the telecommunication signals being located in the frequency band occupied by the television signal or like signal, and are offset in frequency relative to the carrier of the television signal, said arrangement comprising :
- the means required for adding at least a spread spectrum telecommunication signal in the channel occupied by a television signal or the like, forming in that way a composite signal at the level of the transmission channel;
said means comprising at least the following elements :
a spread spectrum modulator in order to generate the spread spectrum telecommunication signals; a means for controlling the frequency of the common carrier by the telecommunication signals; a means for controlling the power of the spread spectrum telecommunication signals; a means for transmitting at least a telecommunication signal
- and the means required for receiving the composite signal and for separating at least a spread spectrum telecommunication signal from the composite signal in order to demodulate such signal.

8. Telecommunication apparatus or arrangement of claim 7, wherein the means for inserting spread spectrum telecommunication signals comprises at least one of the following pieces of equipment : (a) a spread spectrum modulator using an analog or digital modulation by phase, amplitude and frequency change or any combination of these changes; of a frequency transposer in order to fix the transmitting frequence of the carrier used by the telecommunication signals; an amplifier for amplifying spread spectrum telecommunication signals; an antenna for transmitting the spread spectrum telecommunication signals; and
(b) a means for adjusting the spreading of the spread spectrum telecommunication signals ; a means for fixing the frequency of the carriers used by the telecommunication signals relative to the one of the television signal, a means for adjusting the power of the spread spectrum telecommunication signals relative to the television signal ; where the means for controlling the spreading, the power and the frequency of the carriers of the telecommunication signals are operable in order to maintain the operating ranges and comprise : means for detecting the power and the frequency of the television signal and the power and frequency of the carrier of the spread spectrum signals present in the transmission channel; means for adjusting the spreading, the frequency and the power of the transmitted spread spectrum signals in such a way that the authorized operating ranges are respected.

9. Telecommunication apparatus or arrangement according to claim 7, wherein the means for receiving comprises : means for obtaining the composite signal; means for separating the telecommunication signals from the television signal; means for selecting the spread spectrum telecommunication signals; means for demodulating at least a spread spectrum telecommunication signal.

10. Telecommunication apparatus according to claim 9 wherein the means for receiving comprised at least one of the following elements : a receiving antenna for the composite signal present in the transmission channel; a power divider for providing the composite signal on one side to the demodulator of the television signal and on the other side to the means for selecting the spread spectrum signals; a channel filter for selecting the spread spectrum signals present in the composite signal; a power divider for providing the selected spread spectrum signals to at least a means for demodulating the spread spectrum signals; at least a spread spectrum demodulator adapted to modulation of analog or digital signals by phase, amplitude or frequency modifications or by any combination of such changes.
